# EUROPÄISCHE PATENTANMELDUNG

(11) **EP 1 353 145 A2**
(43) Veröffentlichungstag der Anmeldung: **15.10.2003**
(21) Anmeldenummer: 03005747.5
(22) Anmeldetag: 14.03.2003
(51) Int. Cl.: G01C 15/00

(54) **Verfahren zur Ausrichtung von Bauelementen**

(30) Priorität: 04.04.2002 DE 10214881
(71) Anmelder: Mugrauer, Hubert, 73469 Utzmemmingen (DE)
(72) Erfinder: Mugrauer, Hubert, 73469 Utzmemmingen (DE)
(74) Vertreter: Lorenz, Werner, Dr.-Ing.

(57) **Zusammenfassung**

Zur Ausrichtung und/oder Anordnung von Bauelementen, insbesondere von Säulen, Stangen, Zäunen, Zaunteilen, Betonteilen, Mauern, Mauerfertigteilen und Randsteinen, entlang einer Geraden zwischen zwei Punkten wird an einem Punkt als Bezugspunkt ein Laser zur Abgabe eines Laserstrahls ausgerichtet. An einem anderen Punkt als Bezugspunkt wird eine Laser-Zielerfassung ausgerichtet. Der Laserstrahl und die Laser-Zielerfassung werden aufeinander justiert, so daß der Laserstrahl parallel zu bzw. entlang der Geraden verläuft. Danach werden die Bauelemente entlang der Geraden parallel zu bzw. entlang des Laserstrahls ausgerichtet bzw. angeordnet.

Die Erfindung betrifft auch eine Laser-Zielerfassung zur Durchführung des Verfahrens.

## Beschreibung

Die Erfindung betrifft ein Verfahren zur Ausrichtung und/oder Anordnung von Bauelementen, insbesondere von Säulen, Stangen, Zäunen, Zaunteilen, Betonteilen, Mauern, Mauerfertigteilen und Randsteinen, entlang einer Geraden zwischen zwei Punkten.

Sollen über eine längere Strecke hinweg zusammenhängend oder mit Unterbrechungen Bauelemente, zum Beispiel Mauerfertigteile, entlang einer Geraden ausgerichtet und/oder angeordnet werden, ist es erforderlich, diese Gerade erkennbar zu machen.

Nach heutigem Stand der Technik wurde hierfür bislang ein Seil bzw. eine Schnur gespannt zwischen zwei Punkten auf der Geraden. Die Bauelemente wurden dann entlang dieser Schnur ausgerichtet.

Dieses Verfahren ist jedoch sehr aufwendig. Weil die Schnur so straff wie möglich gespannt werden muß, was nach Möglichkeit ein gleichzeitiges Anspannen des Seiles von beiden Seiten erforderlich macht, sind üblicherweise mindestens zwei Personen dafür erforderlich. Damit ein Spannen der Schnur überhaupt möglich ist, muß zuvor eine Seilhaltevorrichtung an dem Anfangsund dem Endpunkt der Geraden fest angebracht werden. In der Regel handelt es sich hier um einen stabilen Pflock, der in den Boden eingegraben bzw. eingeschlagen wird. Hier treten Probleme auf, denn wenn der Boden sehr steinig und hart ist, läßt sich der Pflock nur sehr schwer einschlagen. Ist der Boden hingegen zu weich, was vor allem nach mehreren Regentagen der Fall ist, läßt sich der Pflock zwar einschlagen, aber beim Anspannen der Schnur kippt er nach oder wird ganz aus der Erde gezogen.

Ferner müssen je nach Distanz der Geraden verschieden lange Schnüre zur Verfügung stehen. Insbesondere entlang eines Flughafens oder für den Bau einer Schallschutzmauer entlang einer Autobahn werden Mauern oder Zäune oft über eine Länge von mehreren 100 Metern aufgerichtet. Andererseits gilt es, für kleinere Bauprojekte einfache Mauern oder Zäune von nur wenigen Metern Länge anzuordnen. Eine einheitlich lange Schnur für jeden Bedarf zu benutzten ist deshalb nicht möglich.

Nachteilig ist ferner, daß das Aufstellen der Pflöcke und das Spannen der Schnur mit einem erheblichen Zeitund Kraftaufwand verbunden ist. Mit Zeitaufwand verbunden ist auch das Wiederaufrollen der Schnur.

Darüber hinaus ist das Ergebnis des Verfahren nach dem Stand der Technik auch bei sorgfältiger Ausführung äußerst ungenau, denn selbst eine sehr straff gezogene Schnur ist vom Wind beeinflußbar. Insbesondere starker Wind beult die Schnur zur Mitte hin aus und verursacht damit eine Abweichung von der Geraden. Je größer die Distanz zwischen den Pflöcken, desto größer ist die vom Windeinfluß abhängige Ungenauigkeit.

Außerdem ist es selbst auf kurzer Distanz nicht möglich, die Schnur derart straff zu spannen, daß sie auch in der Mitte noch exakt waagrecht verläuft. Die Schnur hängt in der Mitte vielmehr stets etwas tiefer als an den Endstücken, wobei auch hier die Ungenauigkeit mit wachsender Distanz zunimmt. Die Schnur kann deshalb nicht zu einer exakten Höhenausrichtung eines Bauelements dienen.

Nachteilig an diesem bekannten Verfahren ist außerdem, daß die gespannte Schnur beim Antransport und der Ausrichtung bzw. Anordnung der Bauelemente entlang der Geraden ein Hindernis darstellt. Es muß stets darauf geachtet werden, daß während der Bauarbeiten entlang der Schnur nicht diese selbst beschädigt wird. Dies erweist sich insbesondere bei der Arbeit mit großen und schweren Bauelementen wie Mauerfertigteilen, die mittels Kran angeordnet werden müssen, als problematisch. Wertvolle Arbeitszeit geht so durch die Rücksichtnahme auf die Schnur verloren.

Insbesondere auf größeren Baustellen stellt eine gespannte Schnur außerdem stets eine erhöhte Unfallgefahr und ein allgemeines Hindernis dar. Die Schnur muß umfahren werden und behindert andere Bautätigkeiten. Bei Unachtsamkeit kann die Schnur ungewollt durchtrennt werden oder es kann sich einer der Pflöcke lösen, wenn ein Baufahrzeug versehentlich gegen die Schnur fährt. In diesem Fall muß die zeit- und kraftaufwendige Anordnung der Pflöcke und/oder der Schnur erneut vorgenommen werden.

Der vorliegenden Erfindung liegt daher die Aufgabe zugrunde, eine Möglichkeit zu schaffen, durch die eine Ausrichtung bzw. Anordnung von Bauelementen entlang einer Geraden einfach und exakt möglich ist, unabhängig von Windbedingungen und ohne Störung des Arbeitsablaufs auf der Baustelle.

Diese Aufgabe wird erfindungsgemäß durch die kennzeichnenden Merkmale von Anspruch 1 gelöst.

Eine erfindungsgemäße Laser-Zielerfassung zur Durchführung des Verfahrens ergibt sich aus den kennzeichnenden Merkmalen von Anspruch 12.

Durch das erfindungsgemäße Verfahren wird die Gerade für die Ausrichtung bzw. Anordnung der Bauelemente visualisiert, ohne daß es jedoch'zu einer gegenständlichen Markierung und damit zu den Nachteile des bislang bekannten Verfahrens kommt.

Zur Aufstellung und Ausrichtung des Lasers und der Laser-Zielerfassung ist lediglich eine Person erforderlich. Die Aufstellung und Ausrichtung ist unkompliziert und ohne besonderen Kraft- oder Zeitaufwand möglich. Weder am Ausgangs- noch am Endpunkt der Geraden muß ein Pflock eingeschlagen werden. Das Lasergerät und die Laser-Zielvorrichtung können ohne Fixierungsaufwand einfach und schnell aufgestellt werden. Das Verfahren ist auf kurzen und langen Distanzen gleichermaßen anwendbar. Dabei wird die Gerade auch bei Distanzen über Hunderte von Metern hinweg absolut exakt und zuverlässig markiert, unabhängig von Wind- und anderen Wettereinflüssen.

Weil das erfindungsgemäße Verfahren die Gerade optisch erkennbar macht, jedoch nicht gegenständlich markiert, kommt es nicht zu Störungen im Arbeitsablauf auf der Baustelle. Das Anordnen bzw. Ausrichten der Bauelemente kann zügig erfolgen, weil die Markierung durch den Laserstrahl, anders als eine Schnur, bei einer Berührung natürlich nicht zerrissen oder verschoben wird. Auch andere Arbeiten auf der Baustelle werden nicht behindert. Baustellenfahrzeuge müssen entlang der Geraden keine Umwege in Kauf nehmen und es ist keine Unfallgefahr gegeben.

Durch das erfindungsgemäße Verfahren kann anhand des Laserstrahls nicht nur die Gerade exakt markiert, sondern zugleich auch eine konstante Höhe gekennzeichnet werden. So kann beispielsweise die Mauer- oder Zaunhöhe genau bestimmt werden. Ferner ist die Höhenkennzeichnung vorteilhaft im Straßenbau. Durch das erfindungsgemäße Verfahren können Randsteine exakt ausgerichtet werden, und gleichzeitig kann über die Höhenmarkierung visualisiert werden, wie hoch die jeweiligen Kies- bzw. Schotterschichten für den Bau der Straße sein müssen, da auch hier eine durchgehend gleiche Höhe erwünscht ist. Die Auffüllhöhe der einzelnen, bekannten Schichten des Straßenbelags wird durch das erfindungsgemäße Verfahren exakt angezeigt.

Außerdem ist es möglich, einen bestimmten Neigungs- bzw. Steigungswinkel von einem Punkt der Geraden zum anderen zu markieren. Die gleichzeitige Visualisierung einer Geraden und eines Gefälles ist insbesondere im Kanalbau vorteilhaft.

Von Vorteil ist es, wenn die Position, aus welcher der Laserstrahl abgegeben wird, nach der Justierung auf die Laser-Zielerfassung während der Ausrichtung bzw. der Anordnung der Bauelemente unverändert bleibt.

Diese Maßnahme erspart ein neues Justieren während des Verfahrens und garantiert eine konstante, nicht von der ersten Ausrichtung abweichende Markierung der Geraden.

Vorteilhaft ist es außerdem, wenn eines der Bauelemente entlang der Geraden als Bezugselement auf dem Punkt angeordnet bzw. ausgerichtet wird, wonach anschließend die Laser-Zielerfassung an dem Bauelement angeordnet wird und der Laserstrahl und die Laser-Zielerfassung aufeinander justiert werden.

In diesem Fall dient das erste Bauelement, das gesetzt wird, zugleich als Bezugspunkt (Bezugselement) zur ersten Ausrichtung des Laserstrahls. Das erste Bauelement kann also auf die Gerade gesetzt werden, ohne daß zuvor eine Laserstrahl-Markierung vorhanden sein muß. Ein Arbeitsschritt kann so eingespart werden.

Die Laser-Zielerfassung kann über dem Bauelement oder an jeder anderen Stelle des Bauelements angeordnet werden. Je nach örtlichen Gegebenheiten kann die Laser-Zielerfassung mittig am bzw. über dem Bauelement angeordnet werden, so daß der Laserstrahl und die Gerade deckungsgleich sind. In einer weiteren günstigen Ausgestaltung kann die Laser-Zielerfassung aber auch so angeordnet sein, daß der Laserstrahl parallel zur Geraden verläuft. So ergibt sich hinsichtlich der Anordnung der Laser-Zielerfassung eine Flexibilität, die entsprechend der örtlichen Gegebenheiten auf der Baustelle vorteilhaft ist. Der Laserstrahl wird jeweils analog zur Anordnung der Laser-Zielerfassung abgegeben.

In einer weiteren vorteilhaften Ausgestaltung wird die Laser-Zielerfassung zur optimalen Ausrichtung des Bauelements entlang des Bauelements verschoben oder mehrfach angeordnet. Insbesondere bei länglichen Bauelementen, wie beispielsweise Mauerfertigteilen, wird dadurch gewährleistet, daß das Bauelement in der gesamten Länge auf der Geraden ausgerichtet ist.

Weitere vorteilhafte Ausgestaltungen der Herstellungsverfahren ergeben sich aus den Unteransprüchen und den nachfolgend anhand der Zeichnungen prinzipmäßig näher beschriebenen Ausführungsbeispielen.

Eine vorteilhafte Laser-Zielerfassung zur Durchführung des Verfahrens ergibt sich ferner aus den Ansprüchen 12 bis 32 und ebenfalls aus den nachfolgend anhand der Zeichnung prinzipmäßig näher beschriebenen Ausführungsbeispielen.

Es zeigt:
- Fig. 1: eine Prinzipdarstellung des Anordnens von stangenförmigen Bauelementen entlang einer Geraden zwischen zwei Punkten;
- Fig. 2: eine Prinzipdarstellung einer Laser-Zielerfassung zur Durchführung des Verfahrens, in einer Ausgestaltung, wie sie für die Anordnung von stangen- und säulenförmigen Bauelementen vorteilhaft ist; und
- Fig. 3: eine Prinzipdarstellung einer Laser-Zielerfassung zur Durchführung des Verfahrens, in einer Ausgestaltung, wie sie für die Anordnung von Mauerfertigteilen und Randsteinen vorteilhaft ist.

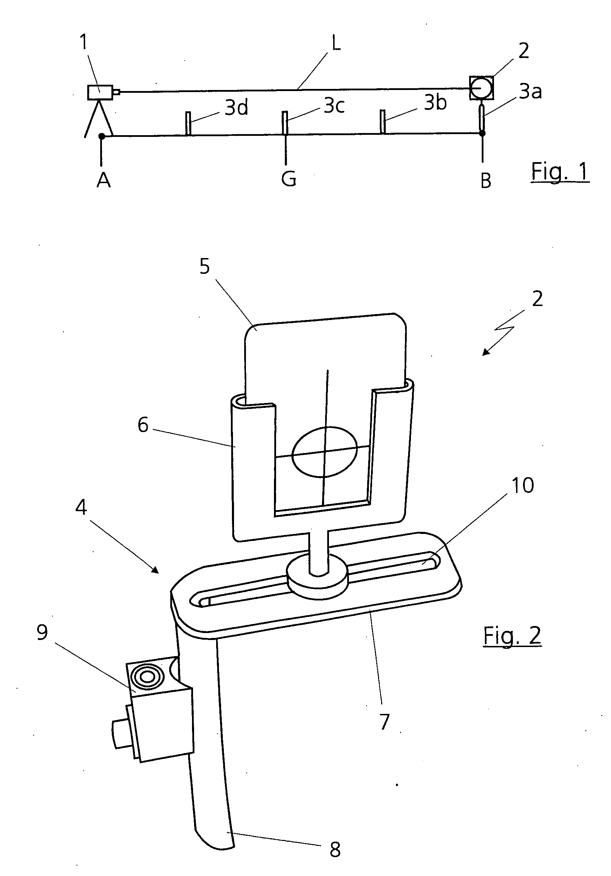

In Fig. 1 ist dargestellt, wie die Gerade G mittels eines Laserstrahls L eines Lasers 1 visualisiert wird. Der Laserstrahl L wird von einem Punkt A auf der Geraden G abgegeben, wobei am anderen Punkt B auf der Geraden G eine Laser-Zielerfassung 2 angeordnet ist. Der Laserstrahl L wird auf die Laser-Zielerfassung justiert. Bauelemente 3, die im Ausführungsbeispiel als Stangen 3a, 3b, 3c, 3d ausgebildet sind, werden nun entlang der sichtbar gemachten Geraden G positioniert.

In einer günstigen Durchführung des Verfahrens bleibt nach der Justierung auf die Laser-Zielerfassung 2 die Position, aus welcher der Laserstrahl L abgegeben wird, während des Verfahrens unverändert, so daß keine mehrfache Justierung notwendig wird.

Dabei können der Laser 1 und die Laser-Zielerfassung 2, ausgerichtet an den Punkten A, B, auch analog parallel zu der Geraden G stehen (nicht dargestellt), so daß der Laserstrahl L in geringem, genau definierten Abstand parallel zur Geraden G verläuft.

Der in Fig. 1 dargestellte Laserstrahl L verläuft exakt, allerdings höhenversetzt, auf der Geraden G.

Ein sehr einfaches und effektives Verfahren besteht darin, die Stange 3a auf dem Punkt B anzuordnen und anschließend die Laser-Zielerfassung 2 an der Stange 3a anzuordnen und den Laserstrahl L und die Laser-Zielerfassung 2 aufeinander zu justieren. Dies empfiehlt sich insbesondere, wenn Punkt B zugleich der Endpunkt der Stangenreihe 3a bis 3d auf der Geraden G sein soll.

Nach der Justierung des Laserstrahls L wird die Laser-Zielerfassung 2 von Punkt B bzw. von der Stange 3a entfernt und an der Stange 3b angeordnet. Die Stange 3b wird nun anhand des Laserstrahls L und der Laser-Zielerfassung 2 auf der Geraden G positioniert, wobei darauf geachtet wird, daß der Laserstrahl L die Laser-Zielerfassung 2 mittig erfaßt. Dadurch wird eine exakte Ausrichtung der Stange 3b auf der Geraden G erreicht.

Bei größeren Bauelementen 3, zum Beispiel Mauerfertigteilen, besteht eine günstige Ausführungsform darin, daß die Laser-Zielerfassung 2 zur optimalen Ausrichtung des Bauelements 3 auf der Geraden G entlang des Bauelements verschoben oder mehrfach angeordnet wird. Dadurch wird sichergestellt, daß zum Beispiel das Mauerfertigteil in der gesamten Länge auf der Geraden G angeordnet ist.

In einem nächsten Schritt wird nun die Laser-Zielerfassung 2 wieder von der Stange 3b entfernt und an der Stange 3c angeordnet. Die Stange 3c wird nun anhand des Laserstrahls L und der Laser-Zielerfassung 2 nach dem bereits im Zusammenhang mit der Positionierung der Stange 3b beschriebenen Vorgang auf der Geraden G ausgerichtet. Gemäß dieser Verfahrensweise können auf der Geraden G beliebig viele Stangen 3 angebracht werden. Die Stangen 3 können durchgängig aneinander gereiht ausgerichtet werden oder in beliebigem Abstand zueinander.

Fig. 2 zeigt eine Vorrichtung zur Laser-Zielerfassung 2 mit einer Zielscheibe 5, einer Zielscheibenhalterung 6 und einer Anpaßvorrichtung 4, die aus einem waagrechten Schenkel 7 und einem senkrechten Schenkel 8 besteht. Am waagrechten Schenkel 7 ist die Zielscheibenhalterung 6 angeordnet. Der senkrechte Schenkel 8 ist zur Anordnung an ein Bauelement 3 oder einen Bezugspunkt vorgesehen, wobei in einer besonderen Ausgestaltung die Zielscheibenhalterung 6 auch am senkrechten Schenkel 8 angeordnet sein kann, was je nach räumlichen Gegebenheiten auf einer Baustelle vorteilhaft sein kann. Wobei je nach Gegebenheit auch ganz auf den waagrechten Schenkel 7 verzichtet werden kann. In einer weiteren Ausgestaltungsmöglichkeit wird der waagrechte Schenkel 7 zur Anordnung an ein Bauelement 3 genutzt.

Der waagrechte Schenkel 7 und der senkrechte Schenkel 8 sind flach, so daß sie auf ebenen Flächen gut angelegt werden können. In einer sinnvollen Weiterbildung der Erfindung ist der senkrechte Schenkel 8 konkav gerundet, so daß dadurch eine einfache Anpassung an stangenförmige oder säulenförmige Bauelemente möglich ist.

Am senkrechten Schenkel 8 ist eine Wasserwaage 9 bzw. eine Libelle angebracht. Für die Anordnung der Wasserwaage 9 ist selbstverständlich auch jede andere Stelle an der Laser-Zielerfassung 2 denkbar.

Der waagrechte Schenkel 7 weist eine Nut 10 auf. Die Zielscheibenhalterung 6 weist ein Gewindeelement auf, das in die Nut 10 einbringbar ist. Das Gewindeelement ist vorzugsweise mit zwei Muttern fixierbar. Dadurch kann die Zielscheibenhalterung 6 entlang der Nut 10 verschoben werden, was eine hohe Variabilität hinsichtlich der Einstellung der Zielscheibenhalterung 6 ermöglicht. Beispielsweise kann die Zielscheibenhalterung 6 dadurch, wie in Fig. 1 dargestellt, mittig über dem Bauelement 3 positioniert werden. Denkbar wäre auch die Anordnung mehrerer Bohrungen entlang des waagrechten Schenkels 7 zur Verstellbarkeit der Zielscheibenhalterung 6. Durch das Anordnen der Zielscheibenhalterung 6 mittels Einschrauben ist eine rasche Verstellbarkeit gewährleistet.

Die Zielscheibenhalterung 6 weist eine Einschuböffnung zum Einschieben der Zielscheibe 5 auf, wodurch die Zielscheibe 5 eingeschoben bzw. ausgetauscht werden kann.

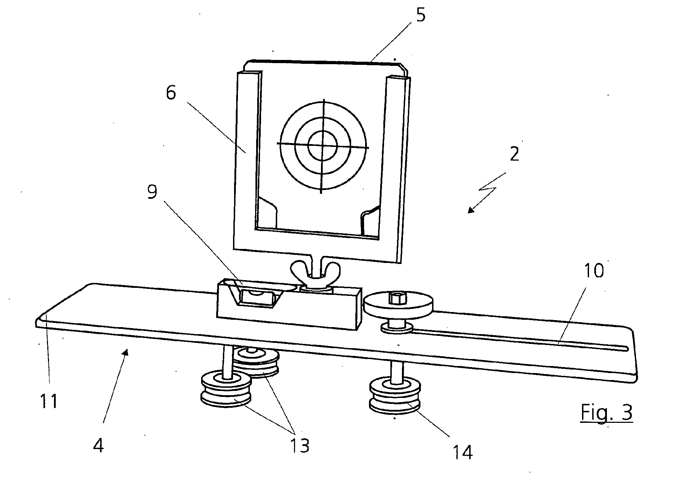

Fig. 3 zeigt die Laser-Zielerfassung 2, mit einer Zielscheibe 5, einer Zielscheibenhalterung 6 und einer Anpassvorrichtung 4, die aus einer Grundplatte 11 besteht. Die Grundplatte 11 kann eine Nut 10 aufweisen. Durch die Grundplatte 11 eignet sich die Laser-Zielerfassung 2 besonders für das Anpassen der Vorrichtung an Mauerfertigteile und Randsteine. In einer günstigen Ausgestaltung besteht die Grundplatte 11 aus einer rechteckigen Fläche.

Die Zielscheibenhalterung 6 ist an der Oberseite der Anpaßvorrichtung 4 angebracht. Die Zielscheibenhalterung 6 kann ein Gewindeelement aufweisen, das in die Nut 10 einbringbar ist, wodurch die Zielscheibenhalterung 6 je nach Bedarf bequem entlang der Nut 10 verschoben werden kann. Denkbar ist aber auch eine feste Anordnung der Zielscheibenhalterung 6 auf der Grundplatte 11.

Die Zielscheibenhalterung 6 kann höhenverstellbar sein.

Auf der Grundplatte 11 ist eine Wasserwaage 9 bzw. eine Libelle angeordnet, wobei natürlich auch jeder andere Anordnungsplatz denkbar wäre. In einer besonders sinnvollen Ausgestaltung weist die Wasserwaage 9 eine Bohrung auf, wobei eine Befestigungsschraube gleichzeitig die Zielscheibenhalterung 6 und die Wasserwaage 9 an der Grundplatte 11 befestigt. Durch die Wasserwaage 9 ist bei der Anordnung der Bauelemente 3 problemlos nicht nur die korrekte Ausrichtung entlang der Geraden G ersichtlich, sondern zugleich die exakte Ausrichtung im Wasser.

In einer alternativen Ausführungsform kann die Wasserwaage 9 auch mit der Grundplatte 11 fest verbunden, beispielsweise verklebt sein, und eine Bohrung zur Aufnahme eines Gewindeelements der Zielscheibenhalterung 6 aufweisen.

In einer günstigen Ausgestaltung ist auf der Oberseite der Anpaßvorrichtung 4 eine Zentimeter-Meßskala in Längsrichtung der Grundplatte 11 angeordnet. Diese erleichtert eine mögliche Anordnung der Laser-Zielerfassung 2 bzw. des Laserstrahls L parallel zu der Geraden G. Im Falle, daß die Laser-Zielerfassung 2 nicht mittig über dem Bauelement 3 (bzw. dem Bezugspunkt B) anbringbar ist, kann anhand der Meßskala die entsprechende Abweichung abgelesen werden, die bei der Justierung des Laserstrahls L berücksichtigt werden muß, weil die Abweichung des Lasers 1 vom Punkt A von der Geraden G analog zur Abweichung der Laser-Zielerfassung vom Punkt B sein muß.

An der Unterseite der Grundplatte 11 sind drei Anlageglieder 13, 14 angeordnet, die jeweils an. die Stärke des Bauelements 3, zum Beispiel einer Mauer, angepaßt werden können und für Stabilität sorgen.

Sinnvoll ist es, wenn als Anlageglieder drei Rollen 13, 14 angeordnet sind. Die Rollen 13, 14 sind so angebracht, daß sie entlang des Bauelements 3 in waagrechter Laufrichtung ein Verschieben der Grundplatte 11 ermöglichen. Dabei sind zwei Rollen 13 auf einer Seite der Grundplatte 11 angebracht. Die Rolle 14 ist mit einem Abstand entsprechend der Mauerstärke zu den zwei Rollen 13 in paralleler Laufrichtung angeordnet. Die Einstellbarkeit der Rollen 13, 14 auf die unterschiedlichen Mauerstärken wird.dadurch ermöglicht, daß der Abstand der Rolle 14 zu den Rollen 13 variabel ist. In einer günstigen Ausgestaltung ist die Rolle 14 in der Nut 10 der Grundplatte 11 verschiebbar angeordnet, beispielsweise durch die Anordnung mit einem Gewindeelement. Dadurch wird eine stufenlose Einstellung gewährleistet.

Die Erfindung ist nicht auf das Versetzen der aufgeführten Bauelemente 3 beschränkt, vielmehr sind für den Fachmann verschiedene Einsatzmöglichkeiten, zum Beispiel zum Versetzen von Zäunen, Säulen oder Betonteilen, denkbar.

## Patentansprüche

1. Verfahren zur Ausrichtung und/oder Anordnung von Bauelementen, insbesondere von Säulen, Stangen, Zäunen, Zaunteilen, Betonteilen, Mauern, Mauerfertigteilen und Randsteinen, entlang einer Geraden zwischen zwei Punkten,
**dadurch gekennzeichnet, daß** folgende Verfahrensschritte:
1.1 an dem Punkt (A) als Bezugspunkt wird ein Laser (1) zur Abgabe eines Laserstrahls (L) ausgerichtet;
1.2 an dem anderen Punkt (B) als Bezugspunkt wird eine Laser-Zielerfassung (2) ausgerichtet;
1.3 der Laserstrahl (L) und die Laser-Zielerfassung (2) werden aufeinander justiert, so daß der Laserstrahl (L) parallel zu bzw. entlang der Geraden (G) verläuft, und
1.4 die Bauelemente (3) werden entlang der Geraden (G) parallel zu bzw. entlang des Laserstrahls (L) ausgerichtet bzw. angeordnet.

2. Verfahren nach Anspruch 1,
**dadurch gekennzeichnet, daß**
die Position, aus welcher der Laserstrahl (L) abgegeben wird, nach der Justierung auf die Laser-Zielerfassung (2) während der Ausrichtung bzw. Anordnung der Bauelemente 3 unverändert bleibt.

3. Verfahren nach Anspruch 1 oder 2,
**dadurch gekennzeichnet, daß**
eines der Bauelemente (3) entlang der Geraden (G) als Bezugselement auf dem Punkt (B) angeordnet bzw. ausgerichtet wird, wonach anschließend die Laser-Zielerfassung (2) an dem Bauelement (3) angeordnet wird und der Laserstrahl (L) und die Laser-Zielerfassung (2) aufeinander justiert werden.

4. Verfahren nach einem der Ansprüche 1 bis 3,
**dadurch gekennzeichnet, daß**
die Laser-Zielerfassung (2) nach der Justierung des Laserstrahls (L) vom Punkt (B) als Bezugspunkt bzw. vom Bauelement (3) entfernt wird.

5. Verfahren nach Anspruch 4,
**dadurch gekennzeichnet, daß**
die Laser-Zielerfassung (2) an einem der Bauelemente (3), die entlang der Geraden (G) zwischen den Punkten (A, B) positioniert werden sollen, angeordnet wird.

6. Verfahren nach Anspruch 3 und 5,
**dadurch gekennzeichnet, daß**
die Laser-Zielerfassung (2) analog zu der Anordnung an dem Bezugselement auf dem Bauelement (3) angeordnet wird.

7. Verfahren nach einem der Ansprüche 1 bis 6,
**dadurch gekennzeichnet, daß**
die Bauelemente (3) auf der Geraden (G) durchgängig aneinander gereiht ausgerichtet bzw. angeordnet werden.

8. Laser-Zielerfassung zur Durchführung des Verfahrens nach einem der Ansprüche 1 bis 7,
**dadurch gekennzeichnet, daß**
die Laser-Zielerfassung (2) eine Zielscheibe (5), eine Zielscheibenhalterung (6) und eine Anpaßvorrichtung (4) aufweist.

9. Laser-Zielerfassung nach Anspruch 8,
**dadurch gekennzeichnet, daß**
die Anpaßvorrichtung (4) aus einem waagrechten Schenkel (7) zum Anordnen einer Zielscheibenhalterung (6) und einem senkrechten Schenkel (8) zur Anordnung an ein Bauelement (3) oder Bezugspunkt besteht.

10. Laser-Zielerfassung nach Anspruch 9,
**dadurch gekennzeichnet, daß**
der senkrechte Schenkel (8) zur Anpassung an stangenförmige oder säulenförmige Bauelemente (3) konkav gerundet ist.

11. Laser-Zielerfassung nach Anspruch 8 oder 9,
**dadurch gekennzeichnet, daß**
der waagrechte Schenkel (7) wenigstens eine Bohrung, Nut (10) oder Aussparung aufweist.

12. Laser-Zielerfassung nach einem der Ansprüche 8 bis 11,
**dadurch gekennzeichnet, daß**
an der Anpaßvorrichtung (4) eine Wasserwaage (9) angebracht ist.

13. Laser-Zielerfassung nach Anspruch 8,
**dadurch gekennzeichnet, daß**
die Anpaßvorrichtung (4) eine Grundplatte (11) mit wenigstens einer Bohrung, Nut (10) oder Aussparung aufweist.

14. Laser-Zielerfassung nach einem der Ansprüche 8 bis 13,
**dadurch gekennzeichnet, daß**
auf der Oberseite der Anpaßvorrichtung eine Meßskala, vorzugsweise ein Zentimetermaßband angeordnet ist.

15. Laser-Zielerfassung nach einem der Ansprüche 13 bis 14,
**dadurch gekennzeichnet, daß**
eine Wasserwaage (9) an der Zielscheibenhalterung (6) oder der Grundplatte (11) angebracht ist.

16. Laser-Zielerfassung nach einem der Ansprüche 13 bis 15,
**dadurch gekennzeichnet, daß**
an der Unterseite der Grundplatte (11) wenigstens zwei Anlageglieder (13,14) angeordnet sind, die an die Dicke des Bauelements (3) anpaßbar sind, wobei die Anlageglieder als Rollen (13,14) ausgebildet sind.

17. Laser-Zielerfassung nach Anspruch 16,
**dadurch gekennzeichnet, daß**
drei Rollen (13,14) vorgesehen sind, durch welche die Grundplatte (11) entlang des Bauelements (3) verschiebbar ist.

18. Laser-Zielerfassung nach Anspruch 16 oder 17,
**dadurch gekennzeichnet, daß**
wenigstens eine der Rollen (14) zur Anpassung an die Dicke des Bauelements (3) in der Nut (10) der Grundplatte (11) verschiebbar angeordnet ist.
